# EUROPEAN PATENT APPLICATION

(11) **EP 4 814 763 A1**
(43) Date of publication of application: **30.09.2026**
(21) Application number: 26166559.0
(22) Date of filing: 20.03.2026
(51) Int. Cl.: G06F 21/50, G06F 21/55

(54) **IDENTITY AND ACTIVITY FINGERPRINT HASHES**

(30) Priority: 28.03.2025 US 202519094502
(71) Applicant: Microsoft Technology Licensing, LLC, Redmond, WA 98052 (US)
(72) Inventor: HATEKAR, ABHIJEET SURENDRA, 98052 Redmond (US); SANGIREDDY, HARISH, 98052 Redmond (US); DRONE, WESLEY SCOTT, 98052 Redmond (US)
(74) Representative: CMS Cameron McKenna Nabarro Olswang LLP

(57) **Abstract**

The present disclosure relates to systems and methods for identifying cybersecurity risks in a cloud environment. The systems and methods generate a unique fingerprint for an event in the cloud environment using a hash structure. The systems and methods detect an anomaly in the event using the fingerprint. The systems and methods use the anomaly in identifying a cybersecurity risk in the cloud environment.

## Description

### BACKGROUND

In modern cloud environments, managing and securing identities and activities is a critical challenge. Cloud environments typically include millions of identities, including users, service principals, and applications. Cloud environments typically also include high-volume activity logs generated across multiple tenants and subscriptions. Complex post-sign-in activities in cloud environments pose significant security risks.

The phase of exploring the hundreds and thousands of activity logs requires a significant usage of machine resources, effort, and time. Moreover, reviewing the large number of activity logs forces the analysts to scroll through hundreds of records in an effort to identify the anomalies. Traditional logging and monitoring techniques often fail to provide actionable insights at scale. The overwhelming volume of activity logs generated by millions of events across diverse resources combined with redundant or irrelevant logs makes it difficult to isolate meaningful insights in activity logs.

### BRIEF SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

Some implementations relate to a method. The method includes extracting, by a machine learning model using a hash structure, information from fields in an activity log of an event. The method includes forming, by the machine learning model, a composite string with the information. The method includes applying, by the machine learning model, a hash function to the composite string. The method includes generating, by the machine learning model, a fingerprint for the event in response to applying the hash function to the composite string, wherein the fingerprint is a unique value for the event. The method includes identifying, using the fingerprint, an anomaly in the event. The method includes performing an action in response to identifying the anomaly.

Some implementations relate to a device. The device includes a memory to store data and instructions; and a processor operable to communicate with the memory, wherein the processor is operable to: extract, using a hash structure, information from fields in an activity log of an event in a cloud environment; form a composite string with the information; apply a hash function to the composite string; and generate a fingerprint for the event in response to applying the hash function to the composite string, wherein the fingerprint is a unique value for the event; and perform an action in response to identifying an anomaly using the fingerprint.

Some implementations relate to a computer-readable storage medium including instructions that, when executed by a processor, cause the processor to: extract, using a hash structure, information from fields in an activity log of an event in a cloud environment; form a composite string with the information, wherein the hash structure identifies an order of placement of the information in the composite string; apply a hash function to the composite string; generate a fingerprint for the event in response to applying the hash function to the composite string, wherein the fingerprint is a unique value for the event; identifying, using the fingerprint, an anomaly in the event in response to detecting a change in pattern for the event; performing an action in response to identifying the anomaly; and preventing a cybersecurity risk in the cloud environment by implementing the action.

Additional features and advantages of embodiments of the disclosure will be set forth in the description which follows, and in part will be obvious from the description, or may be learned by the practice of such embodiments. The features and advantages of such embodiments may be realized and obtained by means of the instruments and combinations particularly pointed out in the appended claims. These and other features will become more fully apparent from the following description and appended claims, or may be learned by the practice of such embodiments as set forth hereinafter.

### BRIEF DESCRIPTION OF DRAWINGS

In order to describe the manner in which the above-recited and other features of the disclosure can be obtained, a more particular description will be rendered by reference to specific implementations thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example implementations, the implementations will be described and explained with additional specificity and detail through the use of the accompanying drawings in which:
Fig. 1 illustrates an example environment for identifying cybersecurity risks in a cloud environment in accordance with implementations of the present disclosure.
Fig. 2 illustrates an example multi-agent artificial intelligence (AI) model architecture for use with implementations of the present disclosure.
Fig. 3 illustrates an example method for identifying cybersecurity risks in a cloud environment in accordance with implementations of the present disclosure.
Fig. 4 illustrates components that may be included within a computer system in accordance with implementations of the present disclosure.

### DETAILED DESCRIPTION

This disclosure generally relates to identifying cybersecurity risks. In the complex world of cloud environments, ensuring the security of identities and access is a critical challenge. With millions of service principals, applications, and sensitive resources spanning multiple tenants and subscriptions, traditional logging and monitoring techniques often fail to provide actionable insights at scale. Existing solutions primarily focus on centralized logging and manual rule creation for anomaly detection, focusing on isolated log analysis and detection rules, lacking cross-log correlation using unified identifiers. While existing solutions model relationships, existing solutions lack the efficiency of hashing mechanisms for scalable anomaly detection in high-volume environments. The overwhelming volume of logs generated by millions of events across diverse resources combined with redundant or irrelevant logs makes it difficult to isolate meaningful insights and overlay on a graph.

When analysts query activity logs, analysts frequently explore hundreds and thousands of results. Analysts perform multiple iterations using excessive machine resources and networking resources. The phase of exploring the hundreds and thousands of activity logs requires a significant usage of machine resources, effort, and time. Moreover, reviewing the large number of activity logs forces the analysts to scroll through hundreds of records in an effort to identify any anomalies in the activity logs. An analyst reviewing a large number of logs is also prone to human error. In the present context, a human error can have significant security consequences, e.g., if a cybersecurity threat goes undetected because of human error. Reliably automating the detection of anomalies in activity logs therefore yields a consequent improvement in system/network security. Automating the detection of anomalies in activity logs reduces usage of machine resources and networking resources during the review process resulting in an improvement in computing by reducing the network resources needed (e.g., fewer network communications needed, using less machine related resources) for supporting the incident investigation.

The present disclosure provides systems and methods for automatically identifying cybersecurity risks. A cybersecurity risk is a potential threat for exposure or loss resulting from a cyberattack or data breach on a digital system or network. The systems and methods generate a unique fingerprint for events in cloud environments. A fingerprint is a unique composite hash for every significant event or activity in the cloud environment. A composite hash is a hash function that combines multiple values to create a single, unique hash value. A hash function is a function that maps data of arbitrary size to fixed-size values. The fingerprint generates a unique value for each event. The systems and methods use a unified, composite hashing framework that generates unique, cryptographically secure hashes to represent individual events or operations in cloud environments. An event is a logged action or occurrence involving a user, application, or system component in the cloud. For example, events capture who did what, where, how, and often why the action or occurrence occurred in the cloud. The systems and methods use the fingerprints to detect anomalies or risky patterns in activity logs. An activity log is a time-stamped record of operations performed on or by cloud resources. Example operations include creating, modifying, deleting, or assigning permissions. In some implementations, an activity log, such as a security activity log, is used by the systems and methods in detecting and analyzing the security incidents. The systems and methods detect at least one anomaly in the activity log data and use the detected anomaly in identifying cybersecurity risks. The present disclosure includes a number of practical applications that provide benefits and/or solve problems associated with identifying cybersecurity risks. Examples of these applications and benefits are discussed in further detail below.

One example benefit is ensuring efficient tracking of events in cloud environments and providing rich context through composite hashes. Another example benefit is handling high-volume cloud environments across multiple tenants. Another example benefit is detecting anomalies and risky patterns with minimal noise. Another example benefit is maintaining consistency with a standardized structure for hash structure across diverse activity log types. Another example benefit is automatically detecting anomalies in activity logs allowing users to focus on unusual patterns that may indicate potential threats. In some implementations (which happen to involve a human), another benefit includes error reduction.

In some implementations, the systems and methods provide automated, structured fingerprints that integrate both authentication and operational events for precise anomaly detection. The composite hashes used in generating the fingerprints inherently link diverse activity logs, enabling end-to-end event tracking and anomaly detection in the activity logs. The systems and methods combine graph-based insights with lightweight hash-based fingerprints for rapid analysis. The composite hashes provide deterministic, explainable results that can also enhance machine learning models with preprocessed anomaly data.

In some implementations, the systems and methods use a consistent hash structure that captures essential metadata for different identities and activities. The structure is extensible, ensuring compatibility with diverse event types while allowing placeholders for irrelevant fields. The systems and methods maintain consistency with a standardized structure for hash structure across diverse activity log types allowing the handling of high-volume cloud environments across multiple tenants and detecting anomalies and risky patterns with minimal noise. By creating unique composite hashes for each event or activity, the systems and methods enable precise anomaly detection, operational correlation, and advanced threat hunting. The fingerprints distill complex event data into concise, reusable identifiers, facilitating real-time monitoring and post-event analysis.

In some implementations, the systems and methods leverage multi-agent artificial intelligence (AI) machine learning models in synthesizing synthetic fingerprints that mimic real-world scenarios, including both benign and anomalous activities in a cloud environment. Using synthetic fingerprints mimicking benign and anomalous activities allows the discovery of latent patterns that suggest anomalies, which might be missed by human-designed fingerprints.

In some implementations, the systems and methods leverage generative AI models. Examples of generative AI models include Generative Pre-trained Transformer (GPT) machine learning models (e.g., GPT-3 or GPT-4), LlaMA, and GEMINI. Examples of generative AI models also include text-to-image models, such as DALL-E. Generative AI models generate content, such as text, images, video, audio, or other data in response to a question or prompt. Another example of a generative AI model includes multi-modal models. In some implementations, the question or prompt is multi-modal input, and the generative AI model processes the multi-modal input to generate content. For example, the generative AI model receives non-text input and generates an output of text. Another example includes the generative AI model receives text input and generates a non-text output. Generative AI models learn the patterns and structure of the input training data and generate new data that has similar characteristics to the input data in response to prompts based on the instructions in the prompts.

In some implementations, the systems and methods leverage multi-agent AI models in generating features for the hash structure using multiple time windows. The multi-agent AI models compute statistical aggregates across dimensions, create ratios and differences between related features, and optimize hashing and aggregation strategies to generate fingerprints. In some implementations, the systems and methods leverage multi-agent AI models in prioritizing fingerprint combinations, recommending the fingerprint combinations, and providing performance estimates against old fingerprints. The multi-agent AI models also recommend the decommissioning of old fingerprints, ensuring continuous improvement and adaptation to emerging cyber security threats.

One technical advantage of the systems and methods of the present disclosure is reducing computational overhead. The systems and methods distill complex event data into concise, reusable identifiers, facilitating operational correlation. The systems and methods link related events and activities, providing a clearer picture of what is happening across the cloud environment compared to historical patterns of the cloud environment. The systems and methods maintain consistency with a standardized structure for hash structure across diverse log types helping in efficiently processing and analyzing activity logs, reducing the computational overhead required for log normalization and correlation. The systems and methods reduce the volume of activity logs analyzed by eliminating redundant or irrelevant data by generating unique fingerprints for each event ensuring meaningful insights are tracked, leading to more efficient use of compute resources.

Another technical advantage of the systems and methods of the present disclosure is real-time monitoring of cloud events supporting advanced cyber security threat hunting. The systems and methods enable real-time monitoring of cloud events and post-event analysis allowing security teams to proactively search for and mitigate potential threats before causing significant harm in a cloud environment.

Another technical advantage of the systems and methods of the present disclosure is precise anomaly detection. The systems and methods create unique composite hashes for significant events or activities in a cloud environment, enabling precise anomaly detection. The methods and systems reduce noise during anomaly detection by focusing on key dimensions (e.g., operation type, geo-location, resource sensitivity) in the hash structure helping in identifying unusual patterns and potential security threats in a cloud environment in real-time.

Another technical advantage of the systems and methods of the present disclosure is scalability. The systems and methods handle high volumes of events across multiple tenants and subscriptions in a cloud environment. The systems and methods efficiently track and provide rich context through composite hashes, making the systems and methods scalable for large-scale cloud environments.

Another technical advantage of the systems and methods of the present disclosure is extensibility. New fields can be added to the hash structure without breaking existing functionality. Another technical advantage of the systems and methods of the present disclosure is efficiency. Hashing is computationally lightweight, enabling near-real-time anomaly detection in cloud environments. Another technical advantage of the systems and methods of the present disclosure is automating the identification of anomalies. Another technical advantage of the systems and methods of the present disclosure is automatically filtering out noise from the activity logs.

The systems and methods automate the analysis of the activity logs and identify anomalies present in the activity logs. The systems and methods streamline the security investigation process reducing the time and effort required to analyze the activity logs.

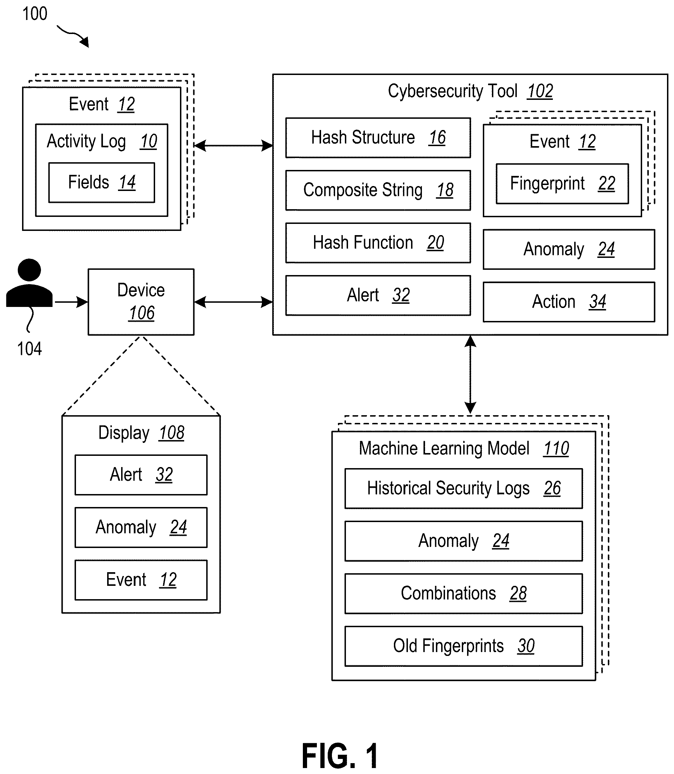

Referring now to Fig. 1, illustrated is an example environment 100 that identifies cybersecurity risks. The environment 100 includes a cybersecurity tool 102 that aids users 104 in identifying cybersecurity risks in a cloud environment. The cybersecurity tool 102 receives an activity log 10 for each event 12 occurring in the cloud environment. An activity log 10 is a record related to the event 12. The activity log 10 is generated in response to the event 12 occurring and the activity log 10 records information about the event 12. An event 12 is a logged action or occurrence involving a user, application, or system component in the cloud environment. One example of an event 12 is a resource access operation (e.g., accessing a resource in the cloud environment). Another example of an event 12 is a sign in procedure (e.g., a user accessing an account in the cloud environment). Another example of an event 12 is a policy update operation.

The activity log 10 includes a plurality of fields 14 describing the information obtained from the event 12. One example field 14 includes a type of event field specifying the nature of the event 12 (e.g., sign in, resource access, policy update). For example, the event field in the activity log 10 includes sign in. Another example field 14 includes an entity identifier field identifying the actor that performed the event 12 (e.g., a service principal identification (ID), user ID, tenant ID). For example, the entity identifier field in the activity log 10 includes SP: 8f0bb7d0-51ef-4c03-8837-ab91cbc1c509.

Another example field 14 includes a client information field capturing user agent, client library, or software details. For example, the client information field in the activity log 10 includes MICROSOFT Authentication Library (MSAL). Another example field 14 includes a geographic/network information field including an internet protocol (IP) address, geo-location information, network provider information, and subscription information. For example, the geographic/network information field in the activity log 10 includes Seattle, the network provider name, 203.0.113.45.

Another example field 14 includes an authentication metadata field including details about the method (e.g., certificate, client secrets), protocol (e.g., OAuth2), and token lifetime. For example, the authentication metadata field in the activity log 10 includes OAuth2, CertificateAuth, 3600. Another example field 14 includes a policy metadata field tracking applied conditional access policies and results. For example, the policy metadata field in the activity log 10 includes MFAEnforced, Success.

Another example field 14 includes a resource metadata field including details about the accessed resource (e.g., KeyVault/Secrets, GraphAPI/Mailbox). For example, the resource metadata field in the activity log 10 includes KeyVault/Secrets.Read.All. Another example field 14 includes an operation metadata field capturing operation-specific details (e.g., target and privileges). For example, the operation metadata field in the activity log 10 includes AddCredential:KeyVaultCert. Another example field 14 includes a result metadata field capturing the result of the operation (e.g., success, failure, error code). For example, the result metadata field in the activity log 10 includes success.

The cybersecurity tool 102 receives the activity log 10 from different sources in the cloud environment. In some implementations, the activity log 10 is generated by users accessing the cloud environment and the cybersecurity tool 102 receives the activity log 10 in response to the users accessing the cloud environment. In some implementations, the activity log 10 is generated by applications, servers, and devices running in the cloud environment and the cybersecurity tool 102 receives the activity log 10 from the applications, servers, and devices in response to the event 12 occurring. In some implementations, the cybersecurity tool 102 receives over millions of activity logs 10 corresponding to different events 12 occurring in the cloud environment.

In some implementations, the cybersecurity tool 102 parses the activity log 10 and extracts the fields 14 from the activity log 10. In some implementations, the cybersecurity tool 102 uses a hash structure 16 in identifying the fields 14 for extraction from the activity log 10. The hash structure 16 identifies essential metadata for each identity and event 12 occurring in the cloud environment. In some implementations, the fields 14 selected for the hash structure 16 are based on known correlations between features in the activity log 10 and previous malicious activities in a cloud environment.

In some implementations, the hash structure 16 includes the field names. One example of the hash structure 16 includes <Type of Event Field>, <Entity Identifier Field>, <Client Information Field>, <Geographical/Network Information Field>, <Authentication Metadata Field>, <Policy Metadata Field>, <Resource Metadata Field>, <Operation Metadata Field>, and <Result Metadata Field>. In some implementations, the hash structure 16 is extensible allowing the addition of fields 14. Using a standardized hash structure 16 in parsing the activity log 10 ensures compatibility with diverse event types while allowing placeholders for irrelevant fields. Standardization helps in efficiently processing and analyzing activity logs 10, reducing the computational overhead required for log normalization and correlation.

The cybersecurity tool 102 generates a composite string 18 in response to parsing the activity log 10 and extracting the fields 14 identified in the hash structure 16. A composite string is a string pattern containing placeholders where values from the fields 14 are inserted into a final string. In some implementations, the composite string 18 is constructed by concatenating the fields 14 extracted from the activity log 10 separating the fields 14 by a delimiter. In some implementations, the cybersecurity tool 102 places the fields 14 in an order in the composite string based on the hash structure 16. One example composite string 18 includes SignIn|SP:3e3f92f2|MSAL|Seattle, Network Provider name, 203.0.113.45, ASN12345|OAuth2, CertificateAuth,3600| MFAEnforced, Success|NA|AddCredential:SP4321| Success. In some implementations, the composite string 18 is a normalized string.

In some implementations, the cybersecurity tool 102 applies a hash function 20 to the composite string 18 generating a fingerprint 22 for the event 12. For example, the hash function 20 is a secure hash algorithm (SHA)256. The fingerprint 22 is a unique value for the event 12. The unique value is not duplicated or replicated making the fingerprint 22 distinct for the event 12. In some implementations, the cybersecurity tool 102 generates a fingerprint 22 for each event 12. The fingerprint 22 distills complex event data into a concise, reusable identifier for the event 12 facilitating operational correlation linking related events and activities across a cloud environment.

In some implementations, the cybersecurity tool 102 analyzes the fingerprint 22 of the event 12 and determines whether an anomaly 24 occurred in the event 12. An anomaly 24 is any unusual activity that occurred in the event 12. One example of an anomaly is an error. Another example of an anomaly is an unexpected event. For example, an anomaly is detected for an account logon success when an unsuccessful account logon is expected. Another example of an anomaly is a command line with an unusual structure (e.g., longer than expected or shorter than expected). Another example of an anomaly is a user logging in from a different location than a previously logged location (e.g., logging in from Canada when a home location is the US). Another example of an anomaly is command lines having suspicious encoded commands and reaching to external networks (e.g., internet) to download malicious payloads (e.g., executable, scripts, etc.).

In some implementations, the cybersecurity tool 102 is in communication with a machine learning model 110 that parses the activity log 10, extracts the fields 14, creates a composite string 18, generates the fingerprint 22 for the event 12 using the hash function 20, and identifies whether an anomaly 24 is present in the event 12. In some implementations, the machine learning model 110 is a generative AI model. Examples of the generative AI model include a Generative Pre-trained Transformer (GPT) model (e.g., GPT-3 or GPT-4), LlaMA, and GEMINI. In some implementations, the cybersecurity tool 102 uses a plurality of machine learning models 110 in communication with the cybersecurity tool 102 in parsing the activity log 10, extracting the fields 14, creating a composite string 18, generating the fingerprint 22 for the event 12 using the hash function 20, and identifying any anomalies 24 in the event 12. For example, a combination of multi-agent AI models are used by the cybersecurity tool 102.

In some implementations, the machine learning model 110 analyzes historical security logs 26 discovering patterns in the historical security logs 26. The historical security logs 26 include benign security logs and malicious security logs. The machine learning model 110 is trained on the historical security logs 26 to identify anomalies. The machine learning model 110 uses the analysis of the historical security logs 26 in identifying a correlation between features and known malicious activities in a cloud environment. The machine learning model 110 uses the learned correlation in identifying whether an anomaly 24 occurred in an event 12. Subsampling both benign security logs and malicious security logs helps the machine learning model 110 in identifying unique aspects of the anomaly 24 and improves the identification of anomalies. The machine learning model 110 can model interactions and relationships across dimensions discovering latent patterns suggesting anomalies 24.

In some implementations, the machine learning model 110 generates different combinations 28 for the hash structure 16. The combination 28 includes a subset of the fields 14. In some implementations, the subset of the fields 14 includes fields relevant for cybersecurity. In some implementations, different combinations 28 are selected as the cybersecurity threats change. For example, as an attacker changes an attack pattern for the cloud environment, a different combination 28 is selected for the hash structure 16 in response to the change in attack pattern. One example of a combination 28 is placing the fields 14 in a different order in the hash structure 16. Another example of a combination 28 is selecting a subset of the fields 14 for the hash structure 16. For example, the machine learning model 110 selects the operation type field, the geo-location field, and the resource sensitivity field for the hash structure 16. Another example of a combination 28 is placing the subset of fields 14 for the hash structure 16 in a different order. For example, the machine learning model 110 places the subset of the fields 14 in the following order: the resource sensitivity field, the operation type field, the geo-location field.

In some implementations, the machine learning model 110 uses the analysis of the historical security logs 26 in identifying the combination 28. For example, the machine learning model 110 selects a subset of the fields 14 for the combination 28 based on mapping feature combinations in the historical security logs to past cybersecurity threats. For example, the machine learning model selects the geo-location field, and the operation metadata based on mapping these features to past cybersecurity threats.

In some implementations, the machine learning model 110 uses a correlation of features in historical security logs and known malicious activities in selecting a subset of the fields 14 for the combination 28. For example, the analysis of the historical security logs correlates a type of event (e.g., resource access) and a geo-location with known malicious activities and the machine learning model 110 selects the type of event field and the geo-location field for the combination 28 for resource access events.

In some implementations, the machine learning model 110 uses multiple time windows and features selected from the historical security logs 26 correlated to known malicious activities in selecting a subset of fields 14 for the combinations 28. In some implementations, the machine learning model 110 selects different combinations 28 for different event types.

In some implementations, the machine learning model 110 tests the combinations 28 of the fields 14 and selects one combination for the hash structure 16 in response to the testing. In some implementations, the machine learning model 110 selects a combination for the hash structure that is specific to a known cybersecurity threat. For example, a cybersecurity that is occurring in other cloud environments. One example of the testing includes evaluating performance estimates of the different combinations 28 of the fields 14 in identifying anomalies 24 as compared to old fingerprints 30. Old fingerprints 30 are fingerprints previously generated by the cybersecurity tool 102. The machine learning model 110 selects one combination of the combinations 28 of the fields 14 with the highest performance in identifying the anomalies 24 for the hash structure 16. In some implementations, the integration of feedback loops in the machine learning model 110 improves the fingerprints 22 generated for the events 12 ensuring continuous improvement and adaptation to emerging threats.

The cybersecurity tool 102 uses the fingerprint 22 in identifying an anomaly 24 in the event 12. In some implementations, the fingerprint 22 indicates a change in the pattern for the event 12 and the cybersecurity tool 102 identifies the anomaly 24 in response to the change in the pattern for the event 12. In some implementations, the machine learning model 110 analyzes the fingerprint 22 and identifies the change in pattern for the event 12 based on analysis of the historical security logs 26. For example, the machine learning model 110 detects a change in pattern when an unexpected value is in the fingerprint 22 for the event 12. The fingerprint 22 enables precise anomaly 24 detection helping in identifying unusual patterns and potential security threats in real-time in a cloud environment. In some implementations, the anomalies 24 are estimated using an ensemble of methods, ensuring high fidelity anomalies are found and surfaced to analysts for further triaging. Upon analyzing the anomalies 24, a label is assigned to the anomalies 24 which is either true positive or False positive. The labels are used to refine the anomaly detection process in the next round of training.

In some implementations, the cybersecurity tool 102 generates an alert 32 in response to identifying an anomaly 24 and sends the alert 32 to a device 106 in communication with the cybersecurity tool 102. For example, the cybersecurity tool 102 is in communication with a device 106 via a network. In some implementations, the cybersecurity tool 102 is on a cloud server remote from the device 106 accessed through the network. For example, the cybersecurity tool 102 is hosted on virtual machines in the cloud. The network may include one or multiple networks and may use one or more communication platforms and/or technologies suitable for transmitting data. The network may refer to any data link that enables transport of electronic data between devices of the environment 100. The network may refer to a hardwired network, a wireless network, or a combination of a hardwired network and a wireless network. In one or more implementations, the network includes the internet. The network may facilitate communication between the various computing devices. The server may include one or more computing devices (e.g., including processing units, data storage, etc.) organized in an architecture with various network interfaces for connecting to and providing data management and distribution across one or more client systems. While one device is illustrated, the cybersecurity tool 102 may be in communication with a plurality of devices.

A user 104 accesses the cybersecurity tool 102 using the device 106. The device 106 may be representative of one or multiple devices and may refer to various types of computing devices. For example, the device 106 may include a mobile device such as a mobile telephone, a smartphone, a personal digital assistant (PDA), a tablet, a laptop, or any other portable device. Additionally, or alternatively, the device 106 may include one or more non-mobile devices such as a desktop computer, server device, or other non-portable device. In some implementations, the device 106 may be communicatively coupled (e.g., wired or wirelessly) to a display 108 having a user interface thereon providing a display of system content.

In some implementations, the cybersecurity tool 102 is accessed through the network. For example, a server address configured to an end point of the cybersecurity tool 102 is provided to the device 106 that the user 104 may access using a browser on the device 106. Another example includes an application on the device 106 of the user 104 provides access to the cybersecurity tool 102.

The cybersecurity tool 102 sends the alert 32 for the anomaly 24 to the device 106. In some implementations, the alert 32 with the anomaly 24 and the associated event 12 is presented on the display 108. In some implementations, the alert 32 is automatically presented on the device 106 in response to the cybersecurity tool 102 detecting the anomaly 24. In some implementations, the user 104 sends a request for analysis of the activity logs 10 to the cybersecurity tool 102 and the alert 32 is presented in response to the request.

In some implementations, the user 104 uses the information presented on the display 108 to identify cybersecurity risks and take actions 34 to prevent the cybersecurity risks. For example, the user 104 selects to focus on a specific activity log 10 in investigating the cybersecurity risk. Another example includes the user 104 selects to focus on a specific event 12 in investigating the cybersecurity risk. Another example includes the user 104 prevents an event 12 from occurring in the cloud environment. Another example includes the user 104 blocking access to a resource.

Once an anomaly 24 is detected, appropriate security mitigation action(s) 34 may be automatically taken by the cybersecurity tool 102, such as an action to alert users of the computing system under attack (e.g. by displaying an alert, summary or explanation pertaining to the anomaly), modify a setting or parameter of a computing system (e.g. a computer, or a network of computers), isolate (e.g., quarantine, disconnect, deactivate etc.) an entity (e.g. user, device, service, process, application etc.) within such a computer system, or modify an access privilege associated with such an entity. An anomaly detection may trigger a further analysis to determine whether related activity is malicious or benign.

The environment 100 streamlines the process of incident investigation or a proactive threat hunting by using the fingerprints 22 in automatically identifying any anomalies 24 in the activity logs 10. The environment 100 allows the users 104 to quickly focus on the most relevant event 12 to the incident investigation or threat hunting by providing the detected anomaly 24 in the activity log 10 of the event 12.

The environment 100 effectively groups activities in a cloud environment, enabling precise and scalable anomaly 24 detection at scale. By transforming raw event data from the activity logs 10 into actionable insights on to the graph, the environment 100 empowers security teams to rapidly advance into cybersecurity investigations. The environment 100 enables real-time monitoring and post event analysis allowing security teams to proactively search for and mitigate cybersecurity threats before the cybersecurity threats can cause significant harm to a cloud environment.

In some implementations, one or more computing devices (e.g., servers and/or devices) are used to perform the processing of the environments 100. The one or more computing devices may include, but are not limited to, server devices, cloud virtual machines, personal computers, a mobile device, such as a mobile telephone, a smartphone, a PDA, a tablet, or a laptop, and/or a non-mobile device. The features and functionalities discussed herein in connection with the various systems may be implemented on one computing device or across multiple computing devices. For example, the cybersecurity tool 102 and the machine learning models 110 are implemented on a single computing device. Moreover, in some implementations, one or more subcomponents of the features and functionalities discussed herein may be processed on different server devices of the same or different cloud computing networks. For example, the cybersecurity tool 102 and the machine learning models 110 are implemented on different server devices.

In some implementations, each of the components of the environment 100 is in communication with each other using any suitable communication technologies. In addition, while the components of the environment 100 are shown to be separate, any of the components or subcomponents may be combined into fewer components, such as into a single component, or divided into more components as may serve a particular implementation. In some implementations, the components of the environment 100 include hardware, software, or both. For example, the components of the environment 100 may include one or more instructions stored on a computer-readable storage medium and executable by processors of one or more computing devices. When executed by the one or more processors, the computer-executable instructions of one or more computing devices can perform one or more methods described herein. In some implementations, the components of the environment 100 include hardware, such as a special purpose processing device to perform a certain function or group of functions. In some implementations, the components of the environment 100 include a combination of computer-executable instructions and hardware.

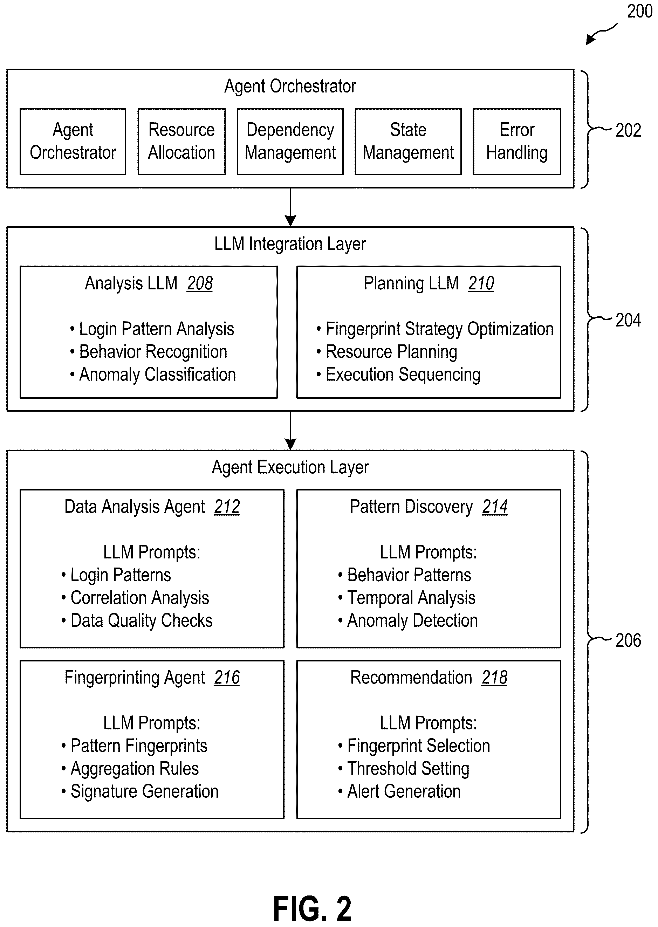

Fig. 2 illustrates an example multi-agent artificial intelligence (AI) model architecture 200 that generates fingerprints 22 (Fig. 1) for events 12 (Fig. 1) occurring in a cloud environment. In some implementations, the multi-agent AI model architecture 200 is used with the cybersecurity tool 102 (Fig. 1). In some implementations, the machine learning models 110 (Fig. 1) are used in the multi-agent AI model architecture 200. In some implementations, the multi-agent models synthesize synthetic fingerprints 22 mimicking real-world scenarios including both benign and anomalous events 12 in a cloud environment.

In some implementations, the multi-agent AI model architecture 200 includes different layers, an agent orchestration layer 202, a LLM integration layer 204, and an agent execution layer 206. The agent orchestration layer 202 helps in task scheduling, resource allocation, dependency management, state management, and error handling. The LLM integration layer 204 includes an analysis LLM 208 and a planning LLM 210. In some implementations, the analysis LLM 208 performs login pattern analysis, behavior recognition, and anomaly classification. In some implementations, the planning LLM 210 performs fingerprint strategy optimization, resource planning, and execution sequencing. The agent execution layer 206 includes a plurality of agents (the data analysis agent 212, the pattern discovery agent 214, the fingerprinting agent 216, and the fingerprint recommendation agent 218) invoked by the analysis LLM 208 and the planning LLM 210. In some implementations, the plurality of agents are specialized agents working together to analyze historical security logs 26 (Fig. 1), discover patterns, engineer new fingerprints, and recommend optimal fingerprints for different types of threats.

In some implementations, the data analysis agent 212 performs pattern analysis, correlation analysis, and data quality checks. For example, the data analysis agent 212 performs login pattern analysis of different events 12 occurring in a cloud environment. In some implementations, the data analysis agent 212 uses the historical security logs 26 (Fig. 1) in performing the pattern analysis and the correlation analysis.

In some implementations, the data analysis agent 212 performs calculations of feature importance scores. For example, the data analysis agent 212 uses SHapley Additive exPlanations (SHAP) values. The data analysis agent 212 performs an analysis of correlations between features and known malicious activities in a cloud environment. In some implementations, the data analysis agent 212 performs univariate anomaly detection to establish baseline feature behaviors in events 12. In some implementations, the data analysis agent 212 uses random forest-based feature ranking.

In some implementations, the pattern discovery agent 214 performs behavior patterns analysis, temporal analysis, and anomaly detection. In some implementations, the pattern discovery agent 214 uses the historical security logs 26 in performing behavior patterns analysis, temporal analysis, and anomaly detection. In some implementations, the pattern discovery agent 214 performs a time series decomposition of feature behaviors. In some implementations, the pattern discovery agent 214 performs auto encoder reconstruction error analysis. In some implementations, the pattern discovery agent 214 uses decision tree path analysis for known threat patterns. In some implementations, the pattern discovery agent 214 performs a mapping of feature combinations to specific threat scenarios or hypertext transfer protocol secure (HTTPs).

In some implementations, the feature engineering and fingerprint agent 216 identifies fingerprint patterns, generates aggregation rules, and generates signatures. In some implementations, the fingerprint agent 216 uses old fingerprints 30 in identifying fingerprint patterns and generating aggregation rules. In some implementations, the fingerprint agent 216 generates derived features for fingerprints 22 using multiple time windows. For example, the multiple time windows are different periods of time and the fingerprint agent 216 generates different derived features for the different periods of time. In some implementations, the fingerprint agent 216 computes statistical aggregates across dimensions. In some implementations, the fingerprint agent 216 creates ratios and differences between related features for fingerprints 22. In some implementations, the fingerprint agent 216 tests effectiveness of fingerprints 22 using cross-validation. In some implementations, the fingerprint agent 216 optimizes hashing and aggregation strategies to generate fingerprints 22.

In some implementations, the fingerprint recommendation agent 216 performs fingerprint 22 selection, threshold setting, and alert 32 (Fig. 1) generation. In some implementations, the fingerprint agent 218 uses historical fingerprints in selecting fingerprints 22 for the events 12. In some implementations, the fingerprint recommendation agent 218 prioritizes fingerprint combinations 28 (Fig. 1) and provides performance estimates against old fingerprints 30 (Fig. 1). The fingerprint recommendation agent 218 recommends the fingerprint combinations 28. In some implementations, the fingerprint recommendation agent 218 estimates performance of old fingerprints 30 and recommends decommissioning of old fingerprints 30, ensuring continuing improvement and adaptation to emerging threats.

In some implementations, the multi-agent AI model architecture 200 uses message queues for agent communication. The multi-agent AI model architecture 200 maintains a shared state of discoveries driving feature engineering and fingerprinting work. The multi-agent AI model architecture 200 implements feedback loops for consistent and continuous improvement helping in monitoring false positive and false negative rates of anomaly 24 (Fig. 1) detection. The multi-agent AI model architecture 200 implements A/B testing for new feature combinations allowing measurements of detection latency and computation cost for different fingerprints 22. Iterative model improvement and integration of feedback loops improves the fingerprints 22 generated for the events 12 ensuring continuous improvement and adaptation to emerging threats.

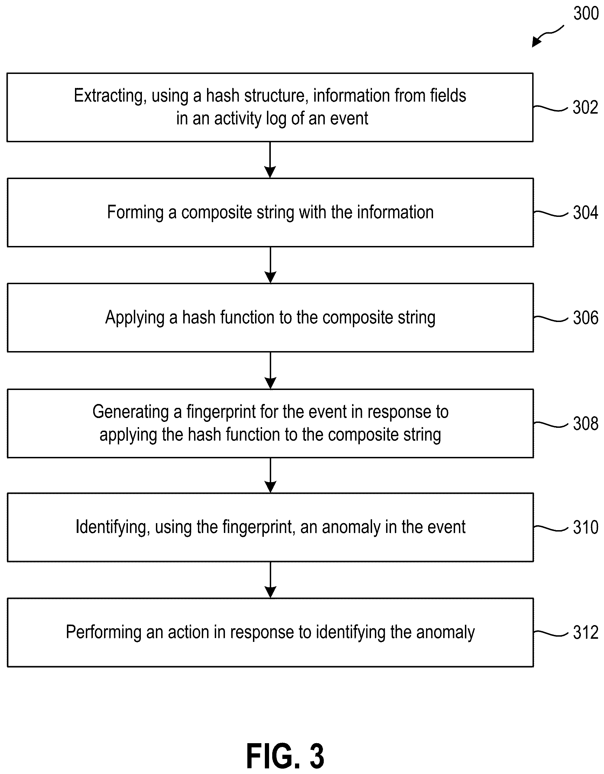

Fig. 3 illustrates an example method 300 for identifying cybersecurity risks in a cloud environment. The actions of the method 300 are discussed below in reference to Figs. 1 and 2. In some implementations, the cybersecurity tool 102 performs the actions of the method 300. In some implementations, the machine learning model 110 performs the actions of the method 300. In some implementations, the cybersecurity tool 102 in combination with the machine learning model 110 perform the actions of the method 300. In some implementations, a plurality of machine learning models (e.g., the data analysis agent 212, the pattern discovery agent 214, the fingerprint agent 216, and the fingerprint recommendation agent 218) working together perform the actions of the method 300. In some implementations, a plurality of machine learning models in combination with the cybersecurity tool 102 perform the actions of the method 300.

At 302, the method 300 includes extracting, using a hash structure, information from fields in an activity log of an event. In some implementations, the event occurs in a cloud environment. In some implementations, the event occurs on a device. In some implementations, the cybersecurity tool 102 extracts the information from the fields 14 of the activity log 10 using the hash structure 16. In some implementations, the machine learning model 110 extracts the information from the fields 14 of the activity log 10 using the hash structure 16. For example, the machine learning model 110 is a generative machine learning model. In some implementations, the hash structure 16 is a standardized structure identifying the fields 14 in the activity log 10 relevant for cybersecurity.

In some implementations, the machine learning model 110 analyzes historical security logs 26 identifying features correlated to previous malicious activities in the cloud environment and generates the hash structure 16 with a subset of fields 14 selected based on the features. In some implementations, the machine learning model 110 identifies different combinations 28 of the fields 14 for the hash structure 16 and tests the different combinations 28 of the fields 14. The machine learning model 110 selects one combination of the fields 14 from the different combinations 28 of the fields 14 for the hash structure 16 in response to the testing.

In some implementations, the different combinations 28 of the fields 14 includes a subset of the fields 14 relevant for cybersecurity in the activity log 10, and the subset of the fields 14 is selected based on mapping features in historical security logs 26 to past cybersecurity threats. In some implementations, the different combinations 28 of the fields 14 is derived using multiple time windows and features selected from historical security logs 26 correlated to known malicious activities during the time windows. In some implementations, the machine learning model 110 tests the different combinations 28 of the fields 14 by evaluating performance estimates of the different combinations 28 of the fields 14 in identifying the anomaly 24 as compared to old fingerprints 30.

At 304, the method 300 includes forming a composite string with the information. In some implementations, the cybersecurity tool 102 forms the composite string 18. In some implementations, the machine learning model 110 forms the composite string 18. In some implementations, the hash structure 16 identifies an order of placement of the information from the fields 14 in the composite string 18.

At 306, the method 300 includes applying a hash function to the composite string. In some implementations, the cybersecurity tool 102 applies the hash function 20 to the composite string 18. In some implementations, the machine learning model 110 applies the hash function 20 to the composite string 18. One example of the hash function 20 includes SHA256.

At 308, the method 300 includes generating a fingerprint for the event in response to applying the hash function to the composite string. In some implementations, the cybersecurity tool 102 generates a fingerprint 22 for the event 12 in response to applying the hash function 20 to the composite string 18. In some implementations, the machine learning model 110 generates a fingerprint 22 for the event 12 in response to applying the hash function 20 to the composite string 18. The fingerprint 22 is a unique value for the event 12. In some implementations, the fingerprint 22 is generated in response to the event 12 occurring in the cloud environment. The fingerprint 22 distills complex event data into a concise, reusable identifier for the event 12 facilitating operational correlation linking related events and activities across a cloud environment. In some implementations, the fingerprint 22 is generated in response to the event 12 occurring on a device.

At 310, the method 300 includes identifying, using the fingerprint, an anomaly in the event. In some implementations, the cybersecurity tool 102 identifies an anomaly 24 in the event 12 using the fingerprint 22. In some implementations, the machine learning model 110 identifies an anomaly 24 in the event 12 using the fingerprint 22. In some implementations, the anomaly 24 is identified by identifying a change in pattern for the event 12 using the fingerprint 22.

At 312, the method 300 includes performing an action in response to identifying the anomaly. In some implementations, the cybersecurity tool 102 performs an action 34 in response to identifying the anomaly. One example of the action 34 includes blocking access to a resource. Another example of the action 34 includes modifying access permissions to a resource. Another example of the action 34 includes isolating an entity. Another example of the action 34 includes alerting users of a device under attack by displaying an alert summary explaining the anomaly 24 identified. In some implementations, the machine learning model 110 performs an action 34 in response to identifying the anomaly 24. One example of the action 34 includes the machine learning model 110 removing old fingerprints 30 in response to detecting the anomaly 24 for the event 12.

In some implementations, the action 34 is automatically performed in response to identifying the anomaly. In some implementations, a cybersecurity risk in the cloud environment is prevented by implementing the action 34.

The method 300 optionally includes sending an alert in response to identifying the anomaly. For example, the cybersecurity tool 102 sends an alert 32 in response to identifying the anomaly 24. In some implementations, the alert 32 is presented on a display 108 of a device 106 with the anomaly 24 and the event 12. In some implementations, the alert 32 is provided to users of the computing system under attack.

The method 300 creates unique fingerprints 22 for events 12 occurring and use the fingerprints 22 in automatically identifying anomalies 24 in the activity logs 10 of the events 12. The method 300 supports cybersecurity threat hunting by providing real-time monitoring of the events 12 occurring .

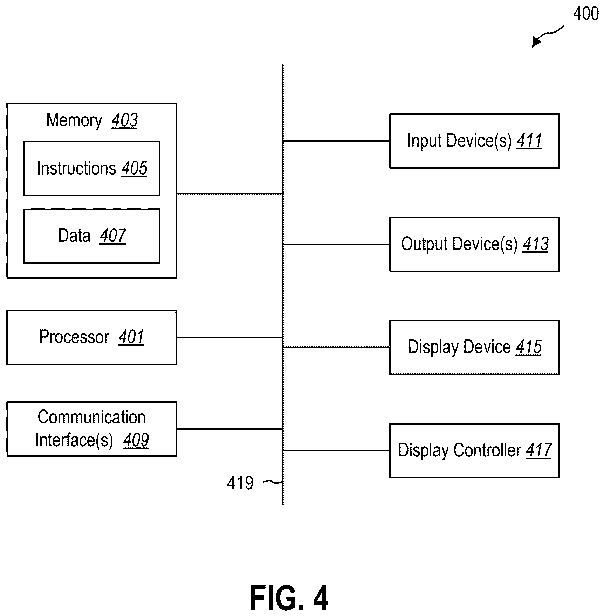

Fig. 4 illustrates components that may be included within a computer system 400. One or more computer systems 400 may be used to implement the various methods, devices, components, and/or systems described herein.

The computer system 400 includes a processor 401. The processor 401 may be a general-purpose single or multi-chip microprocessor (e.g., an Advanced RISC (Reduced Instruction Set Computer) Machine (ARM)), a special purpose microprocessor (e.g., a digital signal processor (DSP)), a graphics processing unit (GPU), a microcontroller, a programmable gate array, etc. The processor 401 may be referred to as a central processing unit (CPU). Although just a single processor 401 is shown in the computer system 400 of Fig. 4, in an alternative configuration, a combination of processors (e.g., an ARM and DSP) could be used.

The computer system 400 also includes memory 403 in electronic communication with the processor 401. The memory 403 may be any electronic component capable of storing electronic information. For example, the memory 403 may be embodied as random access memory (RAM), read-only memory (ROM), magnetic disk storage mediums, optical storage mediums, flash memory devices in RAM, on-board memory included with the processor, erasable programmable read-only memory (EPROM), electrically erasable programmable read-only memory (EEPROM) memory, registers, and so forth, including combinations thereof.

Instructions 405 and data 407 may be stored in the memory 403. The instructions 405 may be executable by the processor 401 to implement some or all of the functionality disclosed herein. Executing the instructions 405 may involve the use of the data 407 that is stored in the memory 403. Any of the various examples of modules and components described herein may be implemented, partially or wholly, as instructions 405 stored in memory 403 and executed by the processor 401. Any of the various examples of data described herein may be among the data 407 that is stored in memory 403 and used during execution of the instructions 405 by the processor 401.

A computer system 400 may also include one or more communication interfaces 409 for communicating with other electronic devices. The communication interface(s) 409 may be based on wired communication technology, wireless communication technology, or both. Some examples of communication interfaces 409 include a Universal Serial Bus (USB), an Ethernet adapter, a wireless adapter that operates in accordance with an Institute of Electrical and Electronics Engineers (IEEE) 802.11 wireless communication protocol, a Bluetooth^{®} wireless communication adapter, and an infrared (IR) communication port.

A computer system 400 may also include one or more input devices 411 and one or more output devices 413. Some examples of input devices 411 include a keyboard, mouse, microphone, remote control device, button, joystick, trackball, touchpad, and lightpen. Some examples of output devices 413 include a speaker and a printer. One specific type of output device that is typically included in a computer system 400 is a display device 415. Display devices 415 used with embodiments disclosed herein may utilize any suitable image projection technology, such as liquid crystal display (LCD), light-emitting diode (LED), gas plasma, electroluminescence, or the like. A display controller 417 may also be provided, for converting data 407 stored in the memory 403 into text, graphics, and/or moving images (as appropriate) shown on the display device 415.

The various components of the computer system 400 may be coupled together by one or more buses, which may include a power bus, a control signal bus, a status signal bus, a data bus, etc. For the sake of clarity, the various buses are illustrated in Fig. 4 as a bus system 419.

In some implementations, the various components of the computer system 400 are implemented as one device. For example, the various components of the computer system 400 are implemented in a mobile phone or tablet. Another example includes the various components of the computer system 400 implemented in a personal computer. Another example includes the various components of the computer system 400 implemented in the cloud. Another example includes the various components of the computer system 400 implemented on an edge device.

As illustrated in the foregoing discussion, the present disclosure utilizes a variety of terms to describe features and advantages of the systems and methods. Additional detail is now provided regarding the meaning of such terms. For example, as used herein, a "machine learning model" refers to a computer algorithm or model (e.g., a classification model, a clustering model, a regression model, a language model, an object detection model, a probabilistic graphical model) that can be tuned (e.g., trained) based on training input to approximate unknown functions. For example, a machine learning model may refer to a neural network (e.g., a convolutional neural network (CNN), deep neural network (DNN), recurrent neural network (RNN)), or other machine learning algorithm or architecture that learns and approximates complex functions and generates outputs based on a plurality of inputs provided to the machine learning model. As used herein, a "machine learning system" may refer to one or multiple machine learning models that cooperatively generate one or more outputs based on corresponding inputs. For example, a machine learning system may refer to any system architecture having multiple discrete machine learning components that consider different kinds of information or inputs.

The techniques described herein may be implemented in hardware, software, firmware, or any combination thereof, unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium comprising instructions that, when executed by at least one processor, perform one or more of the methods described herein. The instructions may be organized into routines, programs, objects, components, data structures, etc., which may perform particular tasks and/or implement particular data types, and which may be combined or distributed as desired in various implementations.

Computer-readable mediums may be any available media that can be accessed by a general purpose or special purpose computer system. Computer-readable mediums that store computer-executable instructions are non-transitory computer-readable storage media (devices). Computer-readable mediums that carry computer-executable instructions are transmission media. Thus, by way of example, and not limitation, implementations of the disclosure can comprise at least two distinctly different kinds of computer-readable mediums: non-transitory computer-readable storage media (devices) and transmission media.

As used herein, non-transitory computer-readable storage mediums (devices) may include RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

The steps and/or actions of the methods described herein may be interchanged with one another without departing from the scope of the claims. In other words, unless a specific order of steps or actions is required for proper operation of the method that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a database, a datastore, or another data structure), ascertaining and the like. Also, "determining" can include receiving (e.g., receiving information), accessing (e.g., accessing data in a memory) and the like. Also, "determining" can include resolving, selecting, choosing, establishing, predicting, inferring, and the like.

The articles "a," "an," and "the" are intended to mean that there are one or more of the elements in the preceding descriptions. The terms "comprising," "including," and "having" are intended to be inclusive and mean that there may be additional elements other than the listed elements. Additionally, it should be understood that references to "one implementation" or "an implementation" of the present disclosure are not intended to be interpreted as excluding the existence of additional implementations that also incorporate the recited features. For example, any element described in relation to an implementation herein may be combinable with any element of any other implementation described herein. Numbers, percentages, ratios, or other values stated herein are intended to include that value, and also other values that are "about" or "approximately" the stated value, as would be appreciated by one of ordinary skill in the art encompassed by implementations of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01% of a stated value.

In one aspect, there is provided a method comprising: extracting, by a machine learning model using a hash structure, information from fields in an activity log of an event; forming, by the machine learning model, a composite string with the information; applying, by the machine learning model, a hash function to the composite string; generating, by the machine learning model, a fingerprint for the event in response to applying the hash function to the composite string, wherein the fingerprint is a unique value for the event; identifying, using the fingerprint, an anomaly in the event; and performing an action in response to identifying the anomaly.

In one embodiment, the hash structure is a standardized structure identifying the fields in the activity log relevant for cybersecurity and an order of placement of the information from the fields in the composite string.

In one embodiment, the method further comprises identifying, by the machine learning model, different combinations of the fields for the hash structure; testing, by the machine learning model, the different combinations of the fields; and selecting, by the machine learning model, one combination of the fields from the different combinations of the fields for the hash structure in response to the testing.

In one embodiment, the different combination of the fields includes a subset of the fields relevant for cybersecurity in the activity log and the subset of the fields is selected based on mapping features in historical security logs to past cybersecurity threats.

In one embodiment, the different combination of the fields is derived using multiple time windows and features selected from historical security logs correlated to known malicious activities during the time windows.

In one embodiment, testing the different combination of the fields includes evaluating performance estimates of the different combination of the fields in identifying the anomaly as compared to old fingerprints.

In one embodiment, the machine learning model generates the fingerprint in response to event occurring.

In one embodiment, identifying the anomaly further includes identifying a change in pattern for the event using the fingerprint.

In one embodiment, the action is one or more of blocking access to a resource, modifying access permissions to a resource, or isolating an entity.

In one embodiment, the action includes alerting users of a device under attack by displaying an alert summary explaining the anomaly identified.

In one embodiment, the method further comprises preventing a cybersecurity risk in a cloud environment by implementing the action.

In another aspect, there is provided a device comprising: a memory to store data and instructions; and a processor operable to communicate with the memory, wherein the processor is operable to: extract, using a hash structure, information from fields in an activity log of an event; form a composite string with the information; apply a hash function to the composite string; generate a fingerprint for the event in response to applying the hash function to the composite string, wherein the fingerprint is a unique value for the event; and perform an action in response to identifying an anomaly using the fingerprint.

In one embodiment, the action is one or more of blocking access to a resource, modifying access permissions to a resource, or isolating an entity.

In one embodiment, the processor is further operable to send an alert in response to identifying an anomaly using the fingerprint.

In one embodiment, the alert is presented on a display of a device with the anomaly and the event.

In one embodiment, the hash structure is a standardized structure identifying the fields in the activity log relevant for cybersecurity and an order of placement of the information from the fields in the composite string.

In one embodiment, in a generative machine learning model extracts the information from the fields in the activity log, forms the composite string, applies the hash function to the composite string, and generates the fingerprint.

In one embodiment, the generative machine learning model analyzes historical security logs identifying features correlated to previous malicious activities in a cloud environment and generates the hash structure with a subset of fields selected based on the features.

In one embodiment, a plurality of generative machine learning models working together extract the information from the fields in the activity log, form the composite string, apply the hash function to the composite string, and generate the fingerprint.

In another aspect, there is provided a computer-readable storage medium including instructions that, when executed by a processor, cause the processor to: extract, using a hash structure, information from fields in an activity log of an event in a cloud environment; form a composite string with the information, wherein the hash structure identifies an order of placement of the information in the composite string; apply a hash function to the composite string; generate a fingerprint for the event in response to applying the hash function to the composite string, wherein the fingerprint is a unique value for the event; identifying, using the fingerprint, an anomaly in the event in response to detecting a change in pattern for the event; performing an action in response to identifying the anomaly; and preventing a cybersecurity risk in the cloud environment by implementing the action.

The present disclosure relates to systems and methods for identifying cybersecurity risks in a cloud environment. The systems and methods generate a unique fingerprint for an event in the cloud environment using a hash structure. The systems and methods detect an anomaly in the event using the fingerprint. The systems and methods use the anomaly in identifying a cybersecurity risk in the cloud environment.

A person having ordinary skill in the art should realize in view of the present disclosure that equivalent constructions do not depart from the spirit and scope of the present disclosure, and that various changes, substitutions, and alterations may be made to implementations disclosed herein without departing from the spirit and scope of the present disclosure. Equivalent constructions, including functional "means-plus-function" clauses are intended to cover the structures described herein as performing the recited function, including both structural equivalents that operate in the same manner, and equivalent structures that provide the same function. It is the express intention of the applicant not to invoke means-plus-function or other functional claiming for any claim except for those in which the words 'means for' appear together with an associated function. Each addition, deletion, and modification to the implementations that falls within the meaning and scope of the claims is to be embraced by the claims.

The present disclosure may be embodied in other specific forms without departing from its spirit or characteristics. The described implementations are to be considered as illustrative and not restrictive. The scope of the disclosure is, therefore, indicated by the appended claims rather than by the foregoing description. Changes that come within the meaning and range of equivalency of the claims are to be embraced within their scope.

## Claims

1. A method comprising:
extracting (302), by a machine learning model (110) using a hash structure (16), information from fields (14) in an activity log (10) of an event (12);
forming (304), by the machine learning model (110), a composite string (18) with the information;
applying (306), by the machine learning model (110), a hash function (20) to the composite string (18);
generating (308), by the machine learning model (110), a fingerprint (22) for the event (12) in response to applying the hash function (20) to the composite string (18), wherein the fingerprint (22) is a unique value for the event (12);
identifying (310), using the fingerprint (22), an anomaly (24) in the event (12); and
performing (312) an action (34) in response to identifying the anomaly (24).

2. The method of claim 1, wherein the hash structure is a standardized structure identifying the fields in the activity log relevant for cybersecurity and an order of placement of the information from the fields in the composite string, and
wherein the machine learning model generates the fingerprint in response to event occurring.

3. The method of claim 1 or 2, further comprising:
identifying, by the machine learning model, different combinations of the fields for the hash structure;
testing, by the machine learning model, the different combinations of the fields; and
selecting, by the machine learning model, one combination of the fields from the different combinations of the fields for the hash structure in response to the testing.

4. The method of claim 3, wherein the different combination of the fields includes a subset of the fields relevant for cybersecurity in the activity log and the subset of the fields is selected based on mapping features in historical security logs to past cybersecurity threats, and
wherein testing the different combination of the fields includes evaluating performance estimates of the different combination of the fields in identifying the anomaly as compared to old fingerprints.

5. The method of claim 3, wherein the different combination of the fields is derived using multiple time windows and features selected from historical security logs correlated to known malicious activities during the time windows.

6. The method of any of claims 1-5, wherein identifying the anomaly further includes identifying a change in pattern for the event using the fingerprint.

7. The method of any of claims 1-6, wherein the action is one or more of blocking access to a resource, modifying access permissions to a resource, isolating an entity, or alerting users of a device under attack by displaying an alert summary explaining the anomaly identified.

8. The method of any of claims 1-7, further comprising:
preventing a cybersecurity risk in a cloud environment by implementing the action.

9. A device comprising:
a memory to store data and instructions; and
a processor operable to communicate with the memory, wherein the processor is operable to:
extract, using a hash structure (16), information from fields (14) in an activity log (10) of an event (12);
form a composite string (18) with the information;
apply a hash function (20) to the composite string (18);
generate a fingerprint (22) for the event (12) in response to applying the hash function (20) to the composite string (18), wherein the fingerprint (22) is a unique value for the event (12); and
perform an action (34) in response to identifying the anomaly (24) using the fingerprint (22).

10. The device of claim 9, wherein the action is one or more of blocking access to a resource, modifying access permissions to a resource, or isolating an entity.

11. The device of claim 9 or 10, wherein the processor is further operable to:
send an alert in response to identifying an anomaly using the fingerprint, wherein the alert is presented on a display of a device with the anomaly and the event.

12. The device of any of claims 9-11, wherein the hash structure is a standardized structure identifying the fields in the activity log relevant for cybersecurity and an order of placement of the information from the fields in the composite string.

13. The device of any of claims 9-12, wherein a generative machine learning model extracts the information from the fields in the activity log, analyzes historical security logs identifying features correlated to previous malicious activities in a cloud environment, generates the hash structure with a subset of fields selected based on the features, forms the composite string, applies the hash function to the composite string, and generates the fingerprint.

14. The device of any of claims 9-13, wherein a plurality of generative machine learning models working together extract the information from the fields in the activity log, form the composite string, apply the hash function to the composite string, and generate the fingerprint.

15. A computer-readable storage medium including instructions that, when executed by a processor, cause the processor to:
extract, using a hash structure (16), information from fields (14) in an activity log (10) of an event (12) in a cloud environment;
form a composite string (18) with the information, wherein the hash structure (16) identifies an order of placement of the information in the composite string (18);
apply a hash function (20) to the composite string (18);
generate a fingerprint (22) for the event (12) in response to applying the hash function (20) to the composite string (18), wherein the fingerprint (22) is a unique value for the event (12);
identifying, using the fingerprint (22), an anomaly (24) in the event (12) in response to detecting a change in pattern for the event (12);
performing an action (34) in response to identifying the anomaly (24); and
preventing a cybersecurity risk in the cloud environment by implementing the action (34).
